(19) Europäisches Patentamt
European Patent Office
Office européen des brevets

(11) EP 3 854 205 A1

(12) EUROPÄISCHE PATENTANMELDUNG

(43) Veröffentlichungstag:
28.07.2021  Patentblatt 2021/30

(51) Int Cl.:
A01J 5/007 (2006.01)    G06Q 10/08 (2012.01)
G06Q 50/02 (2012.01)    G06Q 10/06 (2012.01)

(21) Anmeldenummer: 21150850.2

(22) Anmeldetag: 11.01.2021

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 21.01.2020  DE 102020000328

(71) Anmelder: Schwarte Group GmbH
48282 Emsdetten (DE)

(72) Erfinder:
• Hartmann, Ferdinand
  48324 Sendenhorst (DE)
• Müller, Steve
  48268 Greven (DE)

(74) Vertreter: Pelster Behrends Patentanwälte PartG
mbB
Haus Sentmaring 17
48151 Münster (DE)

(54) **DIGITAL VERNETZTES ERFASSUNGSSYSTEM FÜR MILCH UND VERFAHREN ZUR ERFASSUNG VON MILCH IN EINEM DIGITAL VERNETZTEN ERFASSUNGSSYSTEM FÜR MILCH**

(57) Die Erfindung betrifft ein digital vernetztes Erfassungssystem für Milch (1000) und ein Verfahren zur Erfassung von Milch (M) in einem digital vernetzten Erfassungssystem für Milch (1000), jeweils im Rahmen einer Milchlieferkette (MK), die die angegebenen Nachteile des Standes der Technik überwinden. Diese Aufgabe wird systemtechnisch unter anderem dadurch gelöst,
• dass wenigstens eine sammelwagenseitige und eine molkereiseitige Datenübertragungseinrichtung (450, 660) und optional zusätzlich eine tankseitige Datenübertragungseinrichtung (2n6) vorgesehen sind,
• dass eine fahrer- und/oder fuhrunternehmerseitige und eine molkereiseitige Fernsteuerungseinrichtung (500, 650) und optional zusätzlich eine lieferantenseitige Fernsteuerungseinrichtung (300; 3n0) vorgesehen sind,
• dass die jeweilige Datenübertragungseinrichtung (450, 660, 2n6) sowie die jeweilige Fernsteuerungseinrichtung (500, 650, 300; 3n0) mit einem Datennetzwerk (100) datenleitend verbunden sind, und das Datennetzwerk (100) mit wenigstens einem Prozessor (110) und wenigstens einem Datenspeicher (120) in datenleitender Verbindung steht, und
• dass die jeweilige Datenübertragungseinrichtung (450, 660, 2n6) sowie die jeweilige Fernsteuerungseinrichtung (500, 650, 300; 3n) dazu eingerichtet sind, die zugeordneten ersten, zweiten oder dritten Daten (D1, D2, D3) in einer der jeweiligen Anwendung angemessenen verzugsarmen Echtzeit drahtlos an das Datennetzwerk (100) zu senden und/oder von diesem zu empfangen.

Figur 2

EP 3 854 205 A1

**Beschreibung**

TECHNISCHES GEBIET

Die Erfindung betrifft ein Erfassungssystem für Milch im Rahmen einer sog. Milchlieferkette, mit wenigstens einer Lieferantenstelle, die wenigstens einen Lieferantentank aufweist, wobei die Lieferantenstelle so eingerichtet ist, dass der wenigstens eine Lieferantentank eine in diesem bevorratete Milchmenge einer Milch zur Abholung bereitstellt, dass zu dieser Milchmenge optional und zusätzlich wenigstens zugeordnete tankseitige Milchmessgrößen ermittelt und in Form von dritten Daten zur digitalen Weiterverarbeitung bereitgestellt werden, mit wenigstens einem Milchsammelwagen, der so eingerichtet ist, dass dieser die in dem wenigstens einen Lieferantentank bereitgestellte Milchmenge in einen Sammelbehälter des Milchsammelwagens überführt, im Zuge der Überführung der Milchmenge für diese Milchmenge wenigstens ausgewählte sammelwagenseitige Milchmessgrößen ermittelt und die wenigstens sammelwagenseitigen Milchmessgrößen in Form von ersten Daten zur digitalen Weiterverarbeitung bereitstellt, mit wenigstens einer Molkerei oder Milchsammelstelle, die so eingerichtet ist, dass diese eine von dem Milchsammelwagen auf einer Erfassungstour in dem Sammelbehälter aufgenommene Gesamtmilchmenge in einen molkereiseitigen Stapelbehälter überführt und dabei wenigstens dieser Gesamtmilchmenge zugeordnete molkereiseitige Milchmessgrößen erfasst und diese in Form von zweiten Daten zur digitalen Weiterverarbeitung bereitstellt.

Weiterhin ist Gegenstand der Erfindung ein Verfahren zur Erfassung von Milch in einem digital vernetzten Erfassungssystem für Milch im Rahmen einer sog. Milchlieferkette nach dem Oberbegriff des Nebenanspruchs 14.

Im Zuge der Überführung der Milchmenge in den Sammelbehälter können bedarfsweise und zusätzlich lieferantenspezifische Vorgabedaten ermittelt oder übernommen und bedarfsweise und zusätzlich eine der überführten Milchmenge repräsentative Milchprobe gewonnen werden.

Unter Lieferant soll nachfolgend auch ein Milcherzeuger oder auch ein milcherzeugender Landwirt mitgelesen werden. Gleiches gilt für Begriffe mit dem Wortstamm "lieferant", wie Lieferantenstelle und Lieferantentank. Im Zusammenhang mit den Begriffen "Molkerei oder Milchsammelstelle" soll beim Begriff "molkereiseitig" stets auch "milchsammelstellenseitig" mitgelesen werden.

STAND DER TECHNIK

Von einer Milchlieferkette im Sinne des Anmeldungsgegenstandes kann man dann sprechen, wenn eine Arbeitsteilung zwischen den Arbeitsebenen Milcherzeugung und Milchverarbeitung besteht und die von verschiedenen Lieferanten bereitgestellte Milch mittels eines mobilen Sammeltanks übernommen und in eine Molkerei oder wenigstens eine Milchsammelstelle angeliefert wird. Eine zeitgemäße Milchlieferkette wird somit gebildet aus wenigstens einem Lieferantentank an wenigstens einer Lieferantenstelle, einem jeweils zugeordneten Lieferanten, wenigstens einem Milchsammelwagen mit einem zugeordneten Fahrer und/oder Fuhrunternehmen und wenigstens der Molkerei oder Milchsammelstelle.

Historisch gesehen hat die Datenverarbeitungs- und Datenübertragungstechnik in ihrem jeweiligen zeitnahen Stand der Technik in die vorgenannte Milchlieferkette immer dort Einzug gehalten, wo dortige Prozesse und/oder Zustände überwacht, Daten ermittelt, übertragen, verarbeitet, ausgewertet, dokumentiert und gespeichert werden mussten. Dies betraf in erster Linie das "Kettenglied" bzw. die "Insellösung" Molkerei oder Milchsammelstelle und das "Kettenglied" Milchsammelwagen. In jüngerer Zeit wird auch die Lieferantenstelle mit ihrem wenigstens einen Lieferantentank in eine automatisierte Überwachung und automatisierte Datenermittlung, Datenübertragung und Datenverarbeitung einbezogen.

Die DE 30 40 171 C2 beschreibt ein Datenregistriersystem zur Erfassung der Daten von bestimmten Gutmengen, insbesondere von Milchlieferungen, welche an Lieferstellen mittels eines Sammeltransportfahrzeugs eingesammelt und zu einer Sammelstelle gebracht werden. Das Sammeltransportfahrzeug besitzt ein Registriergerät, welches Dateneingabevorrichtungen, eine damit verbundene Steuereinheit und mit dieser gekoppelte Speichermittel enthält. In der Sammelstelle ist eine ortsfest angeordnete Konvertiereinrichtung vorgesehen. Die Konvertiereinrichtung ist eingangsseitig über eine Funkverbindung oder Leitungsverbindung mit dem Registriergerät des Sammeltransportfahrzeugs koppelbar.

In der DE 34 40 254 C2 ist ein Verfahren und eine Anordnung zur Milchübernahme aus Behältern verschiedener Lieferanten in einen Sammelbehälter offenbart, wobei in der Anordnung eine Einrichtung zur Datenvorgabe und Datenerfassung mit einem Speicher vorgesehen ist und die Einrichtung mit einer Steuerung des Sammelbehälters dialogfähig und mit einer zentralen Datenverarbeitungsanlage verbindbar ist. Über diese Verbindung werden die seit dem letzten Senden gesammelten Daten an die zentrale Datenverarbeitungsanlage übermittelt. In dem Speicher werden tour- und lieferantenspezifische Messwerte sowie lieferantenspezifische, aus der Erfahrung gewonnene Vorgabedaten gespeichert. Die lieferantenspezifischen Vorgabedaten werden unter anderem zur Steuerung einer repräsentativen Probenahme und zur zusätzlichen Lieferantenidentifizierung herangezogen.

Die DE 10 2016 012 078 A1 betrifft ein Verfahren zur Zugangskontrolle und Tank- überwachung für eine Milchkammer beim Milch-Erzeuger (Landwirt) oder Milch-Lieferanten und Bediensystem zur Durchführung des Verfahrens. Das Verfahren zeichnet sich unter anderem dadurch aus, dass eine beim Milch-Erzeuger oder Milch-Lieferanten außerhalb der Milchkammer angeordnete Zugangskontroll- und Datenerfassungs-Einheit so eingerichtet ist, dass sie Tankdaten als Tankinformationsdaten, Tanküberwachungsdaten und Tankvorgabedaten speichert. Der Zugang zu dem wenigstens einen Anlieferungstank in der Milchkammer und die Überführung der Milch aus dem wenigstens einen Anlieferungstank in den Sammeltank über eine Milchkammertür wird nur dann zugelassen, wenn die Lagerung der bereitgestellten Milch derart erfolgt ist, dass die diesbezüglich in der Zugangskontroll- und Datenerfassungs-Einheit abgelegten Tanküberwachungsdaten den definierten Tankvorgabedaten entsprechen. Die Tanküberwachungsdaten werden an die Steuerungs- und Datenerfassungs-Einheit des Milchsammelwagens übermittelt und von dort an die externe Datenerfassungs-Einheit der Molkerei oder Milchsammelstelle übermittelt und in dieser gespeichert. Die Zugangskontroll- und Datenerfassungs-Einheit ist darüber hinaus so eingerichtet, dass über ein Modem aktuelle Tankdaten per E-Mail und/oder SMS an den Milch-Erzeuger oder Milch-Lieferanten übermittelt werden.

Bei diesen Insellösungen, die sich in der Praxis auf unterschiedliche Milchsammelwagenkonzepte und Erfassungssysteme für Milch stützen, ist es bis zum heutigen Tag mehr oder weniger geblieben, wobei die Überwachung der Prozesse und/oder Zustände und die zugeordnete Datenhandhabung heute weitestgehend digitalisiert und auch webbasiert stattfindet, wie beispielsweise die DE 10 2016 012 078 A1 offenbart.

In der US 2017/0 228 742 A1 wird eine Methode zum Verwalten und Bereitstellen der Herkunft eines Produkts beschrieben. Es ist eine Zuordnung zwischen dem Produkt mit einer eindeutigen Produktkennung sowie eine optionale Zuordnung zwischen dem Produkt und einem gefälschten Produkt offenbart, das auch eine eindeutige Kennung aufweist, wenn das Produkt entlang der Lieferkette von seiner Quellphase die Transformationsphase und die Transportphase durchläuft. Es kann mehr als eine Produktkennung oder ein gefälschtes Produkt geben, da das Produkt manchmal verbunden, manchmal aus Teilen zusammengesetzt und manchmal verpackt ist. Um die Erzeugung und Zuordnung von Kennungen zu verwalten und zu erleichtern, während sich das Produkt entlang der Lieferkette bewegt, gibt es eine Datenspeichervorrichtung. Diese dient zum Speichern der eindeutigen Kennung des Produkts sowie der Zuordnung zwischen der eindeutigen Kennung des Produkts und der eindeutigen Kennung des gefälschten Produkts und anderer Abwandlungen mittels eines Servers. Der Server ist auch so angepasst, dass er eine oder mehrere Eigenschaften des Produkts empfängt und in der Datenspeichervorrichtung speichert, die vorgegeben oder erstellt sind, wenn sich das Produkt entlang der Lieferkette bewegt. Wenn der Verarbeiter die eindeutige Kennung eines Produkts oder eines gefälschten Produkts mit einer Abfrage nach der Herkunft des Produkts erhält, wird mindestens ein mit diesem Produkt verbundenes Merkmal verfügbar gemacht.

Die CN 102 799 974 A offenbart eine Verwaltungsvorrichtung zur Rückverfolgung von Milchprodukten und ein Verfahren dafür. Die Verwaltungsvorrichtung umfasst:

- eine Milchquellen-Informationseinheit, die für jede Milchquelle verwendet wird und eine Milchquellen-Identifizierungsinformation erzeugt;
- eine Informationseinheit für die Milchproduktion, wobei die Milchprodukte, die zur Herstellung verwendet werden, Informationen zur Identifizierung von Milchprodukte erzeugen;
- eine Transport-Informationseinheit, die verwendet wird, um einen Transportparameter hinzuzufügen, wobei die Milchprodukte diesbezügliche Informationen identifizieren;
- eine Speicher-Informationseinheit, die verwendet wird, um einen Speicherparameter hinzuzufügen, wobei die Milchprodukte diesbezügliche Informationen identifizieren;
- eine Vertriebs-Informationseinheit, die für den Verkauf verwendet wird, wobei Abgabeparameter hinzugefügt werden und die Milchprodukte diesbezügliche Informationen identifizieren;
- eine Speichereinheit, die verwendet wird, um die Identifizierungsinformationen der Milchquelle und die Identifizierungsinformationen der Milchprodukte zu speichern.

Der bekannte Gegenstand lehrt, die Daten von Verknüpfungen wie Milchproduktion, Transport, Lagerung und Verkauf zu integrieren. So können die relevanten Informationsdaten zwischen den Milchprodukten in jedem Glied der Lieferkette durchsucht werden, wodurch in der gesamten Liefer- und Verbrauchskette von Milchprodukten eine Überprüfung der Qualitätsprobleme bei Milchprodukten durchgeführt werden kann.

Die CN 108 731 828 A offenbart ein Überwachungssystem für Temperaturen in einer gesamten Lieferkette zur Herstellung, Lagerung und zum Transport von Frisch- und Rohmilch und ein Verfahren dafür, die sich auf das technische Gebiet der Informationsdatenverarbeitung und Lebensmittellagerung beziehen. Das Temperatur-Überwachungssystem der Lieferkette verfügt über eine Temperatur-Informationserfassungsfunktion, eine Temperatur-Übertragungsbestimmungsfunktion, eine drahtlose Übertragungsfunktion, eine Hintergrund-Serverfunktion und eine Terminal-Anzeigefunktion. Die Temperatur-Informationserfassungsfunktion wird von einem Temperatursensor und einem Hauptregler implementiert, um die Erfassung von Temperaturinformationen während des gesamten Produktions-, Lagerungs- und Transportprozesses der Frisch- und Rohmilch zu realisieren. Die drahtlose Übertragungsfunktion wird implementiert, indem die Temperatur-Informationen und Fahrzeugstandort-Informationen mittels eines drahtlosen Kommunikationsmoduls an einen Hintergrundserver übertragen werden. Die Hintergrund-Serverfunktion kann Datenanalyse und -verarbeitung realisieren. Die Terminal-Anzeigefunktion kann die Anzeige von Temperaturinformationen, Frühwarnung bei Übertemperatur, Interaktion mit Transportpersonal und Lagerpersonal, Positionierung während des Transports, Vorhersage der Bakterienzahl und dergleichen realisieren. Das Temperatur-Überwachungssystem der Lieferkette kann die Echtzeitleistung von Temperaturinformationen erreichen und den Stromverbrauch und andere Energieaufwände bis zum Ende der Lieferkette reduzieren.

Folgende Nachteile lassen sich bei den heute realisierten Milchlieferketten mit den unterschiedlichsten Milchsammelwagenkonzepten und Erfassungssystemen für Milch konstatieren:

- es fehlt der Ein- und Überblick in bzw. über die gesamte Milcherfassung;
- es fehlt die maximal mögliche Manipulationssicherheit beim Umgang mit den Milcherfassungsdaten speziell und den Daten allgemein;
- es fehlt die uneingeschränkte Überführbarkeit der Milcherfassungsdaten und auch anderer Daten in andere Erfassungssysteme für Milch und auch Erfassungssysteme benachbarter Verkehrskreise;
- es fehlt die uneingeschränkte Verfügbarkeit der an der Milchlieferkette beteiligten Akteure über die Fülle an insgesamt vorhandenen und relevanten Milcherfassungsdaten und anderer Daten zu jeder Zeit und an jedem Ort der Milchlieferkette;
- es fehlt eine weitestgehende Transparenz und lückenlose Dokumentation der Milcherfassungsdaten und eine umfassende Information über die insgesamt vorliegenden Milcherfassungsdaten.

Es ist Aufgabe der vorliegenden Erfindung, ein digital vernetztes Erfassungssystem für Milch und ein Verfahren zur Erfassung von Milch in einem digital vernetzten Erfassungssystem für Milch der jeweils gattungsgemäßen Art zu schaffen, die die vorstehend angegebenen Nachteile überwinden. Eine weitere Aufgabe der Erfindung, der eine eigenständige Bedeutung zukommt, besteht darin, den gerätetechnischen Aufwand im Rahmen der vollständigen Digitalisierung der Milchlieferkette im Milchsammelwagen, in der Molkerei oder Milchsammelstelle und optional und zusätzlich auch an der Lieferantenstelle signifikant zu reduzieren.

ZUSAMMENFASSUNG DER ERFINDUNG

Diese Aufgabe wird durch ein digital vernetztes Erfassungssystem für Milch mit den Merkmalen des Anspruchs 1 gelöst. Vorteilhafte Ausgestaltungen des erfindungsgemäßen Erfassungssystems sind Gegenstand der zugeordneten Unteransprüche. Ein Verfahren zur Erfassung von Milch in einem digital vernetzten Erfassungssystem für Milch ist Gegenstand des nebengeordneten Anspruchs 14. Vorteilhafte Ausgestaltungen des erfindungsgemäßen Verfahrens sind in den zugeordneten Unteransprüchen beschrieben.

Die Erfindung geht systemtechnisch von einem an sich bekannten Erfassungssystem für Milch mit den oberbegrifflichen Merkmalen des Anspruchs 1 im Rahmen einer ebenfalls an sich bekannten Milchlieferkette aus. Dabei beschränkt sich das digital vernetzte Erfassungssystem für Milch in seiner Basisversion und im Rahmen der erfindungsgemäßen Aufgabenstellung zunächst auf die vollständige digitale Vernetzung von Milchsammelwagen und Molkerei oder Milchsammelstelle. Die wenigstens eine Lieferantenstelle ist notwendiger Teil der Milchlieferkette, weil hier die einzusammelnde Milch zur Abholung durch den Milchsammelwagen bereitgestellt wird. Die wenigstens eine Lieferantenstelle kann, so sieht es die Erfindung vor, optional und zusätzlich in die erfindungsgemäße vollständige digitale Vernetzung einbezogen werden, wobei festzuhalten ist, dass notwendigerweise alle Lieferantenstellen in der Milchlieferkette ihre Milch bereitstellen, dass aber nicht notwendigerweise alle Lieferantenstellen in der Milchlieferkette die erfindungsgemäße Lösung in Anspruch nehmen müssen.

Die der Erfindung zugrundeliegende Aufgabe wird systemtechnisch gelöst durch die nachstehenden Merkmale, wobei die vorstehenden Anmerkungen zur Basisversion gelten sollen:

- dass der wenigstens eine Milchsammelwagen eine sammelwagenseitige Datenübertragungseinrichtung aufweist,
- dass die wenigstens eine Molkerei oder Milchsammelstelle eine molkereiseitige Datenübertragungseinrichtung aufweist,
- dass die wenigstens eine Lieferantenstelle eine tankseitige Datenübertragungseinrichtung aufweist,
- dass in dem wenigstens einen Milchsammelwagen jeweils wenigstens eine fahrerseitige Fernsteuerungseinrichtung für einen zugeordneten Fahrer, wie beispielsweise ein internetfähiges mobiles Endgerät, und/oder in einem zugeordneten Fuhrunternehmen eine fuhrunternehmerseitige Fernsteuerungseirichtung, wie beispielsweise ein internetfähiges mobiles oder stationäres Endgerät, vorgesehen sind/ist,
- dass in oder im Bereich der wenigstens einen Molkerei oder Milchsammelstelle jeweils wenigstens eine molkereiseitige Fernsteuereinrichtung vorgesehen ist,

- dass an oder im Bereich der wenigstens einen Lieferantenstelle jeweils eine lieferantenseitige Fernsteuerungseinrichtung für einen Lieferanten vorgesehen ist,
- dass die jeweilige Datenübertragungseinrichtung sowie die jeweilige Fernsteuerungseinrichtung mit einem Datennetzwerk datenleitend verbunden sind, und das Datennetzwerk mit wenigstens einem Prozessor bzw. mit Multiprozessoren und wenigstens einem Datenspeicher bzw. einem Verbund von Datenspeichern in datenleitender Verbindung steht, und
- dass die jeweilige Datenübertragungseinrichtung sowie die jeweilige Fernsteuerungseinrichtung dazu eingerichtet sind, die zugeordneten ersten, zweiten oder dritten Daten in einer der jeweiligen Anwendung angemessenen verzugsarmen Echtzeit drahtlos an das Datennetzwerk zu senden und/oder von diesem zu empfangen.

Der erfinderische Grundgedanke besteht darin, unabhängig von Milchsammelwagensystemen und übergeordneten Erfassungssystemen für Milch (Milchlieferketten), sämtliche Teilvorgänge und -aspekte der Milchsammlung, wobei die Milchsammlung im weitesten Sinne auch als Rohstoffsammlung verstanden und in andere ähnlich gelagerte Anwendungsfelder übertragen werden kann, digital abzubilden und vollständig miteinander zu verknüpfen. Mit dieser digitalen Abbildung und Verknüpfung wird gleichzeitig eine transparente Vernetzung der gesamten Milchlieferkette realisiert (Milchsammelwagen, Molkerei oder Milchsammelstelle, Lieferantenstelle, jeweils mit den zugeordneten Akteuren und der jeweils zugeordneten Datentechnik), die einen bisher nie dagewesenen Ein- und Überblick in bzw. über die gesamte Milcherfassung ermöglicht.

Die vollständige Digitalisierung erlaubt eine Vernetzung und Anbindung an andere Systeme in der Milchlieferkette mit einfachen Mitteln. Alle Vorgänge werden transparent und lückenlos dokumentiert, Fehler werden über umfangreiche Checklisten und Anleitungen reduziert, wobei dies der Lebensmittelsicherheit direkt zugutekommt. Zudem lassen sich Kosten- und Zeiteinsparungen durch kürzere Einarbeitungszeiten für beispielsweise neue Fahrer realisieren.

Die vorstehend erwähnte Transparenz manifestiert sich insbesondere dadurch, dass bestimmte Akteure in der Milcherfassung, nämlich der Fahrer und/oder das Fuhrunternehmen, optional und zusätzlich auch der Lieferant, durch Fernsteuerungseinrichtungen der vorstehend erwähnten Art in einer der jeweiligen Anwendung angemessenen verzugsarmen Echtzeit Zugriff auf alle für diese Akteure relevanten Daten und Informationen bekommen können. Das gilt erst recht für die einschlägigen Akteure in der Molkerei oder Milchsammelstelle, denen neben den vorstehend erwähnten internetfähigen mobilen Endgeräten zusätzlich auch stationäre Fernsteuerungseinrichtungen, internetfähige stationäre Endgeräte mit dem notwendigen Zubehör, wie Drucker, Monitore und andere Ausgabegeräte, zur Verfügung stehen.

Das erfindungsgemäße Datennetzwerk ist, wie dies vorgesehen wird, als Web oder Ethernet oder Intranet oder Internet ausgebildet.

Das erfindungsgemäße digital vernetzt Erfassungssystem für Milch ist auf einen sehr stark auf Sicherheit ausgelegten Umgang mit den Daten ausgelegt. Neben der Speicherung der Daten auf Servern der Molkerei oder Milchsammelstelle kann die Speicherung der Daten in einer geschlossenen Daten-Cloud direkt auf Servern des jeweilig autorisierten Betreibers des digital vernetzten Erfassungssystems für Milch erfolgen, beispielsweise Mitarbeiter der Molkerei oder Milchsammelstelle, wobei der mit dem Datennetzwerk jeweils datenleitend verbundene wenigstens eine Prozessor und wenigstens eine Datenspeicher in dieser geschlossenen Daten-Cloud angeordnet und für diese Speicherung vorgesehen ist. Die Daten sind dort manipulationssicher angelegt und beispielsweise über Datenschnittstellen als csv-Dateien jederzeit in andere Systeme überführbar.

Das Problem teilweise mangelnder Konnektivität wird erfindungsgemäß dadurch gelöst, dass die sammelwagenseitige, die molkereiseitige und die optional und zusätzlich vorgesehene tankseitige Steuerungseinrichtung jeweils einen temporären Zwischenspeicher aufweist, der so eingerichtet ist, dass bei mangelnder Konnektivität im Datennetzwerk die jeweils zugeordneten ersten, zweiten und dritten Daten im Zwischenspeicher temporär gespeichert und zu einem späteren Zeitpunkt, wenn eine Netzverbindung wieder vorliegt, übertragen werden.

Bei Stromausfall stellen Akkus und die grundsätzliche Verwendung von beispielsweise eReader-Displays sicher, dass keine Daten verloren gehen. Grundsätzlich erfolgt die Datenübertragung bidirektional, so dass beispielweise dem Fahrer des Milchsammelwagens Informationen und Anweisungen direkt auf die im Führerhaus installierte Fernsteuerungseinrichtung der vorgenannten Art, beispielsweise das Tablet, gegeben werden können.

Weiterhin ist vorgesehen, dass datenleitende Verbindungen innerhalb des Milchsammelwagens, der Molkerei oder Milchsammelstelle und der Lieferantenstelle in an sich bekannter Weise als wenigstens eine der folgenden ausgebildet sind:

- BUS-Systeme wie

  ○ Profibus
  ○ CAN-Bus
  ○ MOD-Bus,

- Ethernet,
- Direktverbindung,
- allgemeine drahtlose Verbindungen wie z.B.

   ◦ Bluetooth
   ◦ Funkstrecke
   ◦ RFID.

Systemtechnisch schlägt die Erfindung zur einfachen Einbindung des wenigstens einen Milchsammelwagens in das digital vernetzte Erfassungssystem für Milch und zur Vernetzung mit dem demselben vor, dass der wenigstens eine Milchsammelwagen eine sammelwagenseitige Steuerungseinrichtung zur automatischen Steuerung eines Annahmesystems aufweist, mit wenigstens einem sammelwagenseitigen Prozessor und wenigstens einem Datenspeicher. Weiterhin ist die sammelwagenseitige Steuerungseinrichtung einerseits datenleitend verbunden mit einer Messanlage zur Ermittlung der sammelwagenseitigen Milchmessgrößen und andererseits datenleitend verbunden mit der sammelwagenseitigen Datenübertragungseinrichtung.

Die notwendigen Steuerungsdaten für das Annahmesystem und die in diesem integrierte Messanlage und wenigstens die über die Messanlage zu ermittelnden Milchmessgrößen bzw. Milchmessdaten werden durch geeignete Sensoren im Annahmesystem und in der Messanlage bereitgestellt, wobei mindestens einer der folgenden Sensoren vorgesehen ist:

- Temperatursensor,
- Drucksensor,
- Durchfluss-/Strömungssensor,

- Leitfähigkeitssensor,
- Trübungssensor/ Schwebekörpersensor,
- Gewichtssensor.
- Endlagensensor,
- Lagerüberwachungssensor,

- Viskositätssensor,
- pH-Wert-Sensor,
- Schaumsensor,
- Füllstandsensor,
- Leermeldesensor,
- Bildsensor, insbesondere Videokamera,
- Verschleißsensor,
- Drehmomentsensor,
- Drehzahlsensor.

Systemtechnisch schlägt die Erfindung weiterhin zur einfachen Einbindung der wenigstens einen Molkerei oder Milchsammelstelle in das digital vernetzte Erfassungssystem für Milch und zur Vernetzung mit demselben vor, dass eine molkereiseitige Steuerungseinrichtung mit wenigstens einem molkereiseitigen Prozessor und wenigstens einem Datenspeicher zur automatischen Steuerung der Über- und Aufnahme der Gesamtmilchmenge in den Stapelbehälter vorgesehen ist. Weiterhin ist die molkereiseitige Steuerungseinrichtung einerseits datenleitend verbunden mit einer molkereiseitigen Sensoreinrichtung zur Ermittlung wenigstens der molkereiseitigen Milchmessgrößen und andererseits datenleitend verbunden mit der molkereiseitigen Datenübertragungseinrichtung. Diese und andere Daten werden durch geeignete Sensoren der molkereiseitigen Sensoreinrichtung ermittelt, wobei die erfindungsgemäße Sensoreinrichtung mindestens einen der folgenden Sensoren aufweist:

- Temperatursensor,
- Drucksensor,
- Durchfluss-/Strömungssensor,
- Leitfähigkeitssensor,
- Trübungssensor/ Schwebekörpersensor,
- Viskositätssensor,
- pH-Wert-Sensor,
- Schaumsensor,

- Füllstandsensor,
- Leermeldesensor,
- Bildsensor, insbesondere Videokamera,
- Gewichtssensor.
- Endlagensensor,
- Lagerüberwachungssensor,
- Verschleißsensor,
- Drehmomentsensor,
- Drehzahlsensor.

Die wenigstens eine Molkerei oder Milchsammelstelle hat in dieser Ausgestaltung und im Kontext zu den im digital vernetzten Erfassungssystem für Milch implementierten Fernsteuerungseinrichtungen Zugriff auf ein im digital vernetzten Erfassungssystem für Milch implementiertes umfangreiches Anwenderprogramm, eine sogenannte "MilkMap", das alle Daten zusammenführt.

Erfindungsgemäß sind die Fernsteuerungseinrichtungen dazu eingerichtet, wenigstens eine der folgenden Maßnahmen auszuführen:

- Auswertung von ersten, zweiten und dritten Daten und Ermittlung von Prozessinformationen über den jeweiligen Erfassungsprozess in einer der jeweiligen Anwendung angemessenen verzugsarmen Echtzeit;,
- Archivierung von ersten, zweiten und dritten Daten und/oder Prozessinformationen;
- Überwachung, Korrektur und Optimierung des jeweiligen Erfassungsprozesses in einer der jeweiligen Anwendung angemessenen verzugsarmen Echtzeit;
- dynamische Anpassung der Erfassungstour, Einrichtung von Sonderrouten und Abweichungen von offiziellen Wegen, jeweils in einer der jeweiligen Anwendung angemessenen verzugsarmen Echtzeit;
- Auswertung von ersten, zweiten und dritten Daten und/oder Prozessinformationen zur vorausschauenden Wartung von Verschleißkomponenten des Erfassungssystems für Milch und/oder vorausschauenden Ersatzteilbestellung für dasselbe.

Die konkrete Ausgestaltung dieser Maßnahmen stellt sich beispielhaft, wie folgt, dar: Das Anwenderprogramm, die MilkMap, beinhaltet nicht nur eine geografische Karte bzw. eine Navigationshilfe, sondern vor allem ein Informationssystem, das alle zur Verfügung stehenden Daten zugänglich und nutzbar macht und somit ein Werkzeug zur Datensammlung und zur Vernetzung von Lieferant bzw. Landwirt, Fahrer des Milchsammelwagens, Fuhrunternehmen und Molkerei oder Milchsammelstelle darstellt.

Die MilkMap bietet zunächst ein sogenanntes "Live Tracking" für jeden Milchsammelwagen. Auf einer auf "Open Street Map" basierenden geografischen Karte, die zur besseren Übersicht beispielsweise mit "Google Maps" oder anderen Kartensystemen unterlegt werden kann, werden die genauen Positionen aller im Moment auf der Erfassungstour befindlichen Milchsammelwagen (MSW) in einer der jeweiligen Anwendung angemessenen verzugsarmen Echtzeit angezeigt. Mit einem Klick lassen sich weitere Informationen bereitstellen, beispielsweise unter folgenden Fragestellungen, deren Aufzählung nicht vollzählig ist:

- Wo fährt der MSW als nächstes hin?

- Wo kommt er her?

- Welche Strecken hat er hinter oder noch vor sich?

- Wie viel und welche Milch ist in den Tankkammern?

- Wer fährt?

Das sogenannte "Navigations-Tool" von MilkMap arbeitet mit dynamischer Routenanpassung in Echtzeit; Sonderrouten und Abweichungen von offiziellen Wegen lassen sich jederzeit anlegen für den Fall, dass sich Straßenverhältnisse durch Wetter oder beispielsweise. Baumaßnahmen ändern. Diese Änderungen können während einer jeden Erfassungstour erfolgen und dem Fahrer sofort in einer der jeweiligen Anwendung angemessenen verzugsarmen Echtzeit zur Verfügung gestellt werden.

MilkMap bietet auch eine Unterstützung bei der Fahrer-Einarbeitung durch detaillierte und individuelle Checklisten und Informationen je Lieferantenstelle bzw. Hof, die sogar mit Fotos oder Videos der vor-Ort-Situation hinterlegt werden können. Nebenbei kann in Pannen- oder Unfallsituationen für schnelle Hilfe gesorgt werden, etwa indem in der Nähe befindliche Milchsammelwagen an das defekte Fahrzeug zwecks Abpumpen der Milch herangeführt oder Reparaturen direkt am Fahrzeug bzw. das Abschleppen veranlasst werden.

Durch eine automatisierte Verschleißerkennung an einschlägig bekannten Bauteilen und Aggregationen des Milchsammelwagens kann die MilkMap dafür Sorge tragen, dass vorausschauend diesbezügliche Ersatzteile automatisch bestellt werden; jedenfalls immer dann, sobald ein Defekt vorliegt. Eine digitale Tourenzusammenfassung einschließlich beispielsweise einer Übersicht über Dauer, Milchmenge und -qualität und Zwischenfälle vervollständigen das Bild für die Molkerei oder Milchsammelstelle.

Quasi als Nebenprodukt liefert die MilkMap auch digitale Checklisten zur einfachen Aufdeckung und Dokumentation wiederkehrender Probleme im Milchsammel- bzw. Milcherfassungs-Alltag.

Für den Fall, dass die wenigstens eine Lieferantenstelle optional und zusätzlich und hinsichtlich der erfindungsgemäßen Datenhandhabung vollumfänglich in das digital vernetzte Erfassungssystem für Milch eingebunden ist, sieht die Erfindung weiterhin zur diesbezüglich einfachen Einbindung und Vernetzung vor, dass die wenigstens eine Lieferantenstelle eine tankseitige Steuerungseinrichtung zur automatischen Steuerung der Lieferantenstelle aufweist, mit wenigstens einem tankseitigen Prozessor und wenigstens einem Datenspeicher. Weiterhin ist die tankseitige Steuerungseinrichtung einerseits datenleitend verbunden mit einer tankseitigen Sensoreinrichtung zur automatischen Ermittlung der tankseitigen Milchmessgrößen sowie bedarfsweise mit Mitteln zur Erfassung bzw. Übernahme der lieferantenspezifischen Vorgabedaten, und andererseits datenleitend verbunden mit der tankseitigen Datenübertragungseinrichtung.

Die wenigstens eine Lieferantenstelle hat in dieser Ausgestaltung Zugriff auf ein im digital vernetzten Erfassungssystem für Milch implementiertes Monitoring- und Analysetool, das automatisch wichtige Daten zur Milch im gekühlten Lieferantentank ermittelt, nämlich vorzugsweise Menge, Temperatur, pH-Wert sowie eine Dokumentation von Rührwerks- und Reinigungsvorgängen. Diese und andere Daten werden durch geeignete Sensoren der tankseitigen Sensoreinrichtung ermittelt, wobei die erfindungsgemäße Sensoreinrichtung mindestens einen der folgenden Sensoren aufweist:

- Temperatursensor,
- Drucksensor,
- Durchfluss-/Strömungssensor,35
- Leitfähigkeitssensor,
- Trübungssensor/ Schwebekörpersensor,
- Viskositätssensor,
- pH-Wert-Sensor (kalibrations arme Sonden, die auch trockenstehen dürfen)

- Schaumsensor,
- Füllstandssensor (Ultraschall, Druck)
- Leermeldesensor,
- Bildsensor, insbesondere Videokamera,
- Drehzahlsensor
- Gewichtssensor.

Die an der Lieferantenstelle gewonnenen Daten werden direkt und in einer der jeweiligen Anwendung angemessenen verzugsarmen Echtzeit an die Molkerei oder Milchsammelstelle übermittelt und eröffnen eine zusätzliche Dimension für die Lebensmittelsicherheit. Der zuständige Disponent in der Molkerei oder Milchsammelstelle kann zum Beispiel ggf. nicht verkehrsfähige Chargen sofort von der Abholung ausschließen oder sicherstellen, dass auf einer Erfassungstour wirklich nur bestimmte Milchsorten erfasst werden. Die Molkerei oder Milchsammelstelle kann für alle relevant erscheinenden Parameter Grenzwerte definieren, deren Einhaltung automatisch überwacht und revisionssicher dokumentiert wird.

Einer weitere Ausgestaltung des erfindungsgemäß digital vernetzten Erfassungssystems für Milch kommt eine eigenständige erfinderische Bedeutung zu, weil durch diese der gerätetechnische Aufwand im Rahmen der vollständigen Digitalisierung der Milchlieferkette, und zwar gleichermaßen an der Lieferantenstelle, im Milchsammelwagen und in der Molkerei oder Milchsammelstelle, signifikant reduziert wird. Dies wird dadurch erreicht, dass eine Steuerungs- und Datenübertragungseinrichtung vorgesehen ist, die derart konfiguriert ist, dass sie als modulares, standardisiertes, universell einsetzbares Bauteil die sammelwagenseitige Steuerungseinrichtung in Verbindung mit der sammelwagenseitigen Datenübertragungseinrichtung, die molkereiseitige Steuerungseinrichtung in Verbindung mit der molkereiseitigen Datenübertragungseinrichtung sowie die tankseitige Steuerungseinrichtung in Verbindung mit der tankseitigen Datenübertragungseinrichtung hinsichtlich Kompatibilität, Struktur, Funktionalität und Vernetzbarkeit uneingeschränkt substituiert.

Die der Erfindung zugrundeliegende Aufgabe wird, ausgehend von dem Oberbegriff des Nebenanspruchs 14, verfahrenstechnisch gelöst durch die nachstehenden Merkmale, wobei die vorstehenden Anmerkungen zur optional erweiterbaren Basisversion auch für das erfindungsgemäße Verfahren gelten:

- dass die in einer sammelwagenseitigen, molkereiseitigen und tankseitigen Datenübertragungseinrichtung bereitgestellten ersten, zweiten und dritten Daten jeweils in einer der jeweiligen Anwendung angemessenen verzugsarmen Echtzeit mittels eines Datennetzwerks und über eine zugeordnete webbasierte sammelwagenseitige, molkereiseitige und tankseitige Datenverbindung an wenigstens einen Prozessor übermittelt, dort verarbeitet und in wenigstens einem Datenspeicher abgelegt und von dort von der sammelwagenseitigen, molkereiseitigen und tankseitigen Datenübertragungseinrichtung empfangen werden,
- dass eine fahrer- und/oder fuhrunternehmerseitige, und molkereiseitige und lieferantenseitige Fernsteuerungseinrichtung vorgesehen und dazu eingerichtet ist, Daten mittels des Datennetzwerks und über eine zugeordnete webbasierte fahrer- und/oder fuhrunternehmerseitige, molkereiseitige sowie lieferantenseitige Datenverbindung an den wenigstens einen Prozessor in Verbindung mit dem wenigstens einen Datenspeicher zu senden und/oder von diesen zu empfangen.

Die webbasierte Datenübertragung im erfindungsgemäßen Datennetzwerk erfolgt, wie dies vorgesehen ist, im Web oder Ethernet oder Intranet oder Internet.

Weiterhin schlägt die Erfindung vor, dass die Daten auf dem Datenspeicher in einer geschlossenen Daten-Cloud oder auf einem molkereiseitigen Datenspeicher gespeichert werden.

Bei mangelnder Konnektivität im Datennetzwerk ist verfahrenstechnisch vorgesehen, dass die ersten, zweiten und dritten Daten in einer jeweils zugeordneten sammelwagenseitigen, molkereiseitigen und optional und zusätzlich tankseitigen Steuerungseinrichtung jeweils so lange zwischengespeichert werden, bis eine Netzverbindung wieder vorliegt.

Hinsichtlich der durch die Fernsteuerungseinrichtungen über das im digital vernetzten Erfassungssystem für Milch hinterlegten Anwenderprogramm (MilkMap) abrufbaren verfahrenstechnischen Maßnahmen wird, um Wiederholungen zu vermeiden, auf die diesbezüglichen Ausführungen zum digital vernetzten Erfassungssystem für Milch verwiesen.

KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen.

Während die Erfindung in den verschiedensten Ausführungsformen eines digital vernetzten Erfassungssystems für Milch der gattungsgemäßen Art und den verschiedensten Ausgestaltungen eines Verfahrens der gattungsgemäßen Art realisiert ist, wird nachfolgend anhand der Zeichnung ein bevorzugtes Ausführungsbeispiel des erfindungsgemäßen Erfassungssystems für Milch und des erfindungsgemäßen Verfahrens zur Erfassung von Milch in einem digital vernetzten Erfassungssystems für Milch beschrieben. Es zeigen

Figur 1   ein Blockschaltbild eines Ausführungsbeispiels eines erfindungsgemäß digital vernetzten Erfassungssystems für Milch;

Figur 2   in schematischer Darstellung das Ausführungsbeispiel des digital vernetzten Erfassungssystems für Milch gemäß **Figur 1;**

Figur 3   ein Blockschaltbild einer geschlossenen Daten-Cloud im Rahmen eines Datennetzwerks gemäß den **Figuren 1** und **2** und

Figur 4   in schematischer Darstellung ein Ausführungsbeispiel einer bevorzugten Ausgestaltung einer universell einsetzbaren Steuerungseinrichtung in Verbindung mit einer Datenübertragungseinrichtung, wie sie in dem digital vernetzten Erfassungssystem für Milch gemäß den **Figuren 1** und **2** zum Einsatz kommt.

**Digital vernetztes Erfassungssystem für Milch**

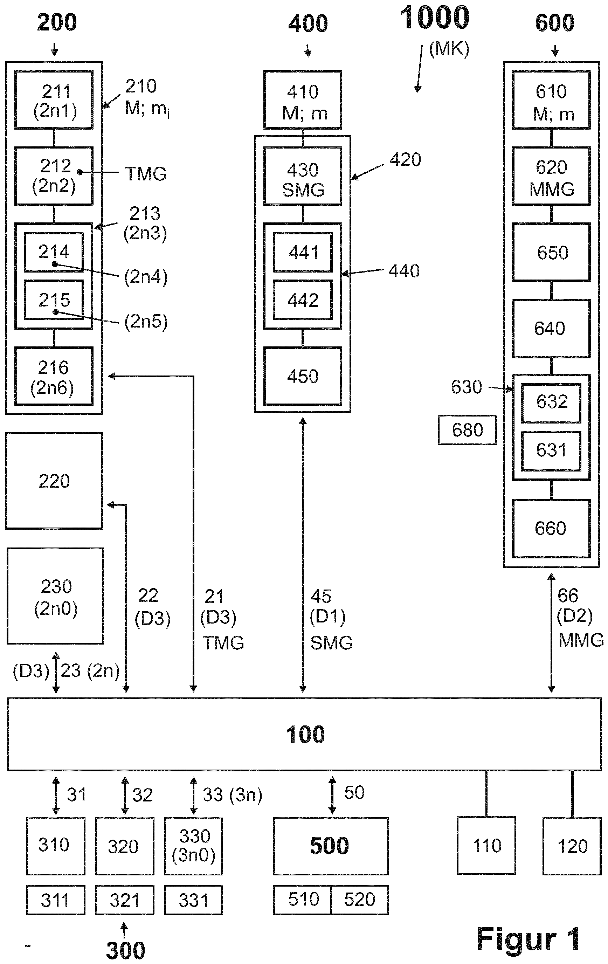

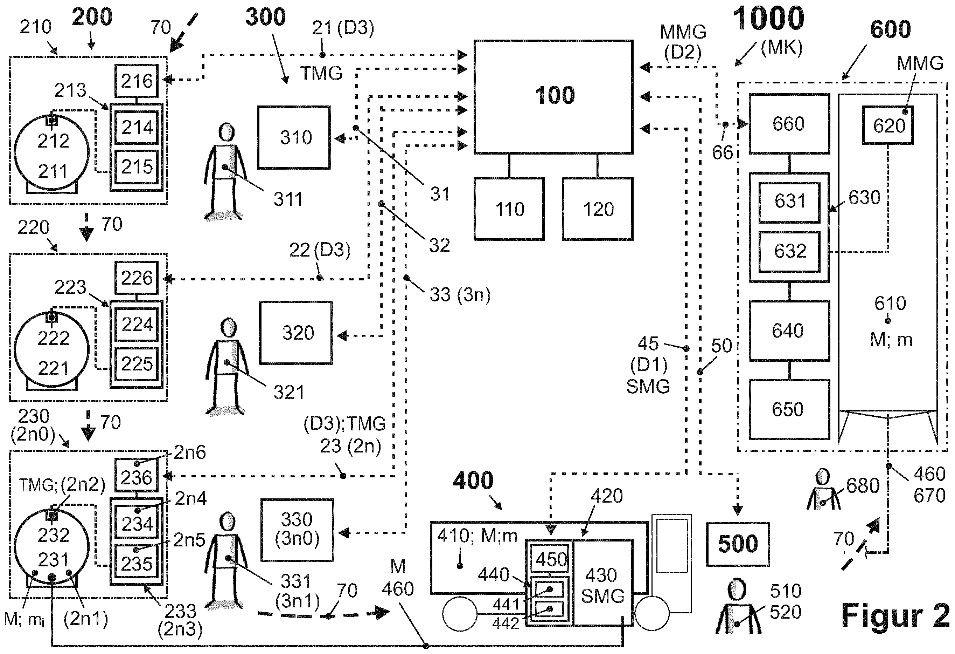

Ein digital vernetztes Erfassungssystem für Milch 1000 im Rahmen einer sogenannten Milchlieferkette MK (**Figuren 1, 2**) weist quasi als zentrales Element ein Datennetzwerk 100 auf, das datenleitend mit wenigstens einem Prozessor 110 und wenigstens einem Datenspeicher 120 verbunden ist. Weitere Elemente sind wenigstens ein Milchsammelwagen 400, wenigstens eine Molkerei oder Milchsammelstelle 600 und optional und zusätzlich wenigstens eine Lieferantenstelle 200, die aus einer Vielzahl (allgemein: Anzahl n), im allgemeinsten Falle aus n Lieferantenstellen (n-te Lieferantenstelle ist mit 2n0 bezeichnet) bestehen kann. Im Ausführungsbeispiel sind eine erste, eine zweite und eine dritte Lieferantenstelle 210, 220, 230 dargestellt, in der jeweils Milch M mit einer jeweiligen Milchmenge $m_i$ bereitgestellt sein kann. Die jeweiligen Milchmengen $m_i$ unterscheiden sich im Regelfall sowohl qualitativ als auch quantitativ voneinander, wobei die quantitativen Unterschiede mehrere Größenordnungen betragen können.

Der wenigstens eine Milchsammelwagen 400 besteht, soweit es im Rahmen des vorliegenden Anmeldungsgegenstandes relevant ist, aus einem Sammelbehälter 410 und einem Annahmesystem 420, wobei letzteres eine Messanlage 430, eine sammelwagenseitige Steuerungseinrichtung 440, die wiederum einen sammelwagenseitigen Prozessor 441 und einen sammelwagenseitiger Datenspeicher 442 beherbergt, und einer sammelwagenseitigen Datenübertragungseinrichtung 450. Der Milchsammelwagen 400 kann auch anders konfiguriert sein. Wesentlich ist, dass über den Milchsammelwagen 400 ermittelten ersten Daten D1, die wenigstens aus sammelwagenseitigen Milchmessgrößen SMG bestehen können, zur digitalen Weiterverarbeitung an der sammelwagenseitigen Datenübertragungseinrichtung 450 bereitgestellt und über eine webbasierte sammelwagenseitige Datenverbindung 45 in das Datennetzwerk 100 in einer der jeweiligen Anwendung angemessenen verzugsarmen Echtzeit übertragen oder dass Daten vom Datennetzwerk 100 empfangen werden.

Die wenigstens eine Molkerei oder Milchsammelstelle 600 besteht, soweit es im Rahmen des vorliegenden Anmeldungsgegenstandes wiederum relevant ist, aus einem molkereiseitigen Stapelbehälter 610, einer molkereiseitigen Sensoreinrichtung 620, einer molkereiseitigen Fernsteuerungseinrichtung 650 der vorstehend beispielhaft beschriebenen Art, einem molkereiseitigen Datennetzwerk 640, einer molkereiseitigen Steuerungseinrichtung 630, die wiederum wenigstens einen molkereiseitigen Prozessor 631 und wenigstens einen molkereiseitigen Datenspeicher 632 beherbergt, und einer molkereiseitigen Datenübertragungseinrichtung 660. Die Molkerei oder Milchsammelstelle 600 kann auch anders konfiguriert sein. Wesentlich ist, dass in der Molkerei oder Milchsammelstelle 600 ermittelten zweiten Daten D2, die wenigstens aus molkereiseitigen Milchmessgrößen MMG bestehen können, zur digitalen Weiterverarbeitung an der molkereiseitigen Datenübertragungseinrichtung 660 bereitgestellt und über eine webbasierte molkereiseitige Datenverbindung 66 in das Datennetzwerk 100 in einer der jeweiligen Anwendung angemessenen verzugsarmen Echtzeit übertragen oder dass Daten vom Datennetzwerk 100 empfangen werden.

Die wenigstens eine Lieferantenstelle 200, im Ausführungsbeispiel die erste Lieferantenstelle 210, besteht, soweit es im Rahmen des vorliegenden Anmeldungsgegenstandes relevant ist, aus wenigstens einem tankseitigen ersten Lieferantentank 211, einer tankseitigen ersten Sensoreinrichtung 212, einer tankseitigen ersten Steuerungseinrichtung 213, die wiederum wenigstens einen tankseitigen Prozessor 214 und wenigstens einen tankseitigen Datenspeicher 215 beherbergt, und einer tankseitigen Datenübertragungseinrichtung 216. Die zweite und die dritte Lieferantenstelle 220, 230 sind identisch konfiguriert, wobei die diesbezüglichen Elemente (siehe **Figur 2**) mit 221, 222, 223, 224, 225, 226 bzw. 231, 232, 233, 234, 235, 236 und jene der n-ten Lieferantenstelle 2n0 mit 2n1, 2n2, 2n3, 2n4, 2n5, 2n6 bezeichnet sind. Die Lieferantenstelle 2n0 kann auch anders konfiguriert sein. Wesentlich ist, dass über die Lieferantenstelle 210, 220, 230, ... 2n0 ermittelten dritten Daten D3, die wenigstens aus tankseitigen Milchmessgrößen TMG bestehen können, zur digitalen Weiterverarbeitung an der tankseitige Datenübertragungseinrichtung 216, 226, 236, ... 2n6 bereitgestellt und über eine webbasierte tankseitige Datenverbindung 21, 22, 23, ... 2n in das Datennetzwerk 100 in einer der jeweiligen Anwendung angemessenen verzugsarmen Echtzeit übertragen oder dass Daten vom Datennetzwerk 100 empfangen werden.

Das digital vernetzte Erfassungssystem für Milch 1000 weist in dem wenigstens einen Milchsammelwagen 400 jeweils wenigstens eine fahrerseitige Fernsteuerungseinrichtung 500 der vorbeschriebenen Art (z.B. Tablett) für einen zugeordneten Fahrer 510 und/oder in einem zugeordneten Fuhrunternehmen 520 eine entsprechende, vorzugsweise identische fuhrunternehmerseitige Fernsteuerungseinrichtung 500 auf (**Figur 2**). Die Fernsteuerungseinrichtung 500 ist über eine webbasierte fahrer- und/oder fuhrunternehmerseitige Datenverbindung 50 mit dem Datennetzwerk 100 datenleitend verbunden.

An oder im Bereich der wenigstens einen Lieferantenstelle 200, 2n0 ist jeweils eine lieferantenseitige Fernsteuerungseinrichtung 300 der vorbeschriebenen Art vorgesehen. Im Ausführungsbeispiel ist es eine lieferantenseitige erste, eine lieferantenseitige zweite, eine lieferantenseitige dritte Fernsteuerungseinrichtung 310, 320, 330, im allgemeinsten Falle eine lieferantenseitige n-te Fernsteuerungseinrichtung 3n0 für einen zugeordneten ersten, einen zweiten, einen dritten Lieferanten 311, 321, 331, im allgemeinsten Falle für einen n-ten Lieferanten 3n1. Die diesbezügliche lieferantenseitige Fernsteuerungseinrichtung 3n0 ist jeweils über eine webbasierte lieferantenseitige erste, eine zweite, dritte Datenverbindung 31, 32, 33, im allgemeinsten Falle eine lieferantenseitige n-te Datenverbindung 3n, mit dem Datennetzwerk 100 datenleitend verbunden.

Die wenigsten eine Lieferantenstelle 2n0 bzw. die Lieferantenstellen 210, 220, 230 bis 2n0 werden im Regelfall auf einer Erfassungstour 70 nach einem Routenplan vom wenigstens einen Milchsammelwagen 400 angefahren, wobei die Übernahme der Milch M aus dem jeweils zugeordneten Lieferantentank 211, 221, 231 bis 2n1 in den jeweiligen Milchmengen $m_i$ über eine sammelwagenseitige Schlauchleitung 460 erfolgt. Die Erfassungstour 70 endet in der Molkerei oder Milchsammelstelle 600, wobei eine im Sammelbehälter 410 eingesammelte Gesamtmilchmenge m, die sich bei einer Anzahl n Lieferanten aus einer entsprechenden Anzahl Milchmengen $m_i$ entsprechend der folgenden Gleichung zu

$$m = \sum_{i=1}^{n} m_i$$

ergibt, entweder über die sammelwagenseitige Schlauchleitung 460 oder eine molkereiseitige Schlauchleitung 670 in den molkereiseitigen Stapelbehälter 610 überführt wird.

Der vorstehende Aufbau des digital vernetzten Erfassungssystems für Milch 1000 wird nachfolgend in seiner Funktion erläutert (**Figuren 1, 2**). In an sich bekannter Weise ist die Lieferantenstelle 200; 2n0 so eingerichtet, dass der wenigstens eine Lieferantentank 2n1 die in diesem bevorratete Milchmenge $m_i$ zur Abholung bereitstellt. Zu dieser Milchmenge $m_i$ können optional und zusätzlich wenigstens zugeordnete tankseitige Milchmessgrößen TMG, beispielsweise Menge, Temperatur, pH-Wert, ermittelt werden. Diese werden dann in Form der dritten Daten D3 zur digitalen Weiterverarbeitung bereitgestellt.

Der wenigstens eine Milchsammelwagen 400 ist so eingerichtet, dass dieser die in dem wenigstens einen Lieferantentank 2n1 bereitgestellte Milchmenge $m_i$ in den Sammelbehälter 410 des Milchsammelwagens 400 überführt und im Zuge der Überführung für diese Milchmenge $m_i$ wenigstens ausgewählte sammelwagenseitige Milchmessgrößen SMG ermittelt und bedarfsweise lieferantenspezifische Vorgabedaten LVD übernimmt bzw. berücksichtigt. Bei den wenigstens sammelwagenseitigen Milchmessgrößen SMG handelt es sich beispielsweise um Menge, Temperatur, Art der Milch, pH-Wert und bei den lieferantenspezifischen Vorgabedaten kann es sich um Tag, Uhrzeit, Lieferantenstelle, letzte angelieferte Menge, die beispielsweise zur Voreinstellung einer automatischen Probenahme herangezogen werden kann, handeln. Im Zuge der Überführung der Milchmenge $m_i$ wird im Regelfall bzw. bedarfsweise eine der überführten Milchmenge $m_i$ repräsentative Milchprobe P gewonnen, in einer Probenflasche gespeichert und unverwechselbar und mit eindeutiger Zuordnung zum jeweiligen Lieferanten aufbewahrt, beispielsweise in einem Probenflaschenmagazin deponiert. Die wenigstens sammelwagenseitigen Milchmessgrößen SMG und bedarfsweise die lieferantenspezifischen Vorgabedaten LVD werden in Form der ersten Daten D1 zur digitalen Weiterverarbeitung bereitgestellt.

Die wenigstens eine Molkerei oder Milchsammelstelle 600 ist so eingerichtet, dass diese die von dem wenigstens einen Milchsammelwagen 400 auf einer Erfassungstour 70 in dem Sammelbehälter 410 aufgenommene Gesamtmilchmenge m in den molkereiseitigen Stapelbehälter 610 überführt und dabei wenigstens dieser Gesamtmilchmenge m zugeordnete molkereiseitige Milchmessgrößen MMG erfasst, beispielsweise Menge, Temperatur, pH-Wert, Tag, Uhrzeit, und diese in Form von zweiten Daten D2 zur digitalen Weiterverarbeitung bereitstellt.

Ausgehend von dem vorgenannten Stand der Technik und den beschriebenen systemtechnischen Merkmalen des erfindungsgemäßen digital vernetzten Erfassungssystems für Milch besteht die Lehre der Erfindung weiterhin darin, die an der jeweiligen Datenübertragungseinrichtung 450, 660, 2n6 bereitgestellten ersten, zweiten oder dritten Daten D1, D2, D3 in einer der jeweiligen Anwendung angemessenen verzugsarmen Echtzeit drahtlos an das Datennetzwerk 100 zu senden und/oder von diesem zu empfangen. Weiterhin stellt die Erfindung sicher, dass über die jeweilige Fernsteuerungseinrichtung 500, 650, 300; 3n0 jederzeit ein autorisierter Zugriff auf alle Daten, Prozesse und Zustände im Datennetzwerk 100 und damit in den mit dem Datennetzwerk 100 datenleitend verbundenen Gliedern der Milchlieferkette MK gegeben ist. Die erwähnte Zugriffsmöglichkeit schließt eine diesbezügliche, autorisierte Einfluss- und Steuerungsmöglichkeit mit ein. Zugriff, Einfluss und Steuerung durch die Akteure in der Milchlieferkette MK erfolgt durch Anwenderprogramme im Bereich des Milchsammelwagens 400, der Molkerei oder Milchsammelstelle 600 und optional und zusätzlich der Lieferantenstelle 2n0, die an geeigneter Stelle im Datennetzwerk 100 implementiert sind, wobei der vorstehend erwähnten MilkMap eine übergeordnete Funktion zukommt. Diesbezügliche Akteure können beispielsweise ein autorisierter Betreiber 680 der Molkerei oder Milchsammelstelle 600, der oder die Fahrer 510, das oder die Fuhrunternehmen 520 oder der oder die Lieferanten 3n1 sein.

## Verfahren zur Erfassung von Milch in einem digital vernetzten Erfassungssystem für Milch

Das erfindungsgemäße Verfahren geht von einem Stand der Technik aus, der sich wie folgt darstellt:

Im Verlauf einer vorgegebenen Erfassungstour 70 wird Milch M aus Lieferantentanks 2n1 verschiedener Lieferanten 3n1 in einen Sammelbehälter 410 eines Milchsammelwagens 400 überführt. Die jeweiligen Lieferanten 3n1 stellen eine jeweilige Milchmenge $m_i$ bereit.

Im Zuge der Überführung der jeweiligen Milchmenge $m_i$ werden für diese Milchmenge $m_i$ wenigstens ausgewählte sammelwagenseitige Milchmessgrößen SMG ermittelt. Wenigstens die sammelwagenseitigen Milchmessgrößen SMG werden in Form von ersten Daten D1 zur digitalen Weiterverarbeitung bereitgestellt.

Eine im Verlauf der Erfassungstour 70 in dem Sammelbehälter 410 aufgenommene Gesamtmilchmenge m wird in einen molkereiseitigen Stapelbehälter 610 überführt und dabei werden wenigstens dieser Gesamtmilchmenge m zugeordnete molkereiseitige Milchmessgrößen MMG erfasst und diese in Form von zweiten Daten D2 zur digitalen Weiterverarbeitung bereitgestellt.

Für den Fall, dass die wenigstens eine Lieferantenstelle 2n0 in das digital vernetzte Erfassungssystem für Milch 1000 optional und zusätzlich vollumfänglich eingebunden ist, werden zur jeweils bereitgestellten Milchmenge $m_i$ wenigstens zugeordnete tankseitige Milchmessgrößen TMG ermittelt und in Form von dritten Daten D3 zur digitalen Weiterverarbeitung bereitgestellt.

Zur Lösung der erfindungsgemäßen Aufgabe weist das Verfahren für den wenigstens einen Milchsammelwagen 400 und für die wenigstens eine Molkerei oder Milchsammelstelle 600 und optional zusätzlich auch für die wenigstens eine Lieferantenstelle 200, 2n0 die jeweils zugeordneten nachfolgenden Merkmale auf:

Die in einer sammelwagenseitigen, molkereiseitigen und tankseitigen Datenübertragungseinrichtung 450, 660; 216, 226, 236, ... 2n6 bereitgestellten ersten, zweiten und dritten Daten D1, D2, D3 werden jeweils in einer der jeweiligen Anwendung angemessenen verzugsarmen Echtzeit mittels eines Datennetzwerks 100 und über eine zugeordnete webbasierte sammelwagenseitige, molkereiseitige und tankseitige Datenverbindung 45, 66; 21, 22, 23, ... 2n an wenigstens einen Prozessor 110 übermittelt, dort verarbeitet und in wenigstens einem Datenspeicher 120 abgelegt und von dort von der sammelwagenseitigen, molkereiseitigen und tankseitigen Datenübertragungseinrichtung 450, 660; 2n6 empfangen.

Eine fahrer- und/oder fuhrunternehmerseitige, molkereiseitige und lieferantenseitige Fernsteuerungseinrichtung 500, 600, 300; 3n0 ist vorgesehen und dazu eingerichtet, Daten mittels des Datennetzwerks 100 und über eine zugeordnete webbasierte fahrer- und/oder fuhrunternehmerseitige, molkereiseitige sowie lieferantenseitige Datenverbindung 50, 66; 31, 32, 33, ...3n an den wenigstens einen Prozessor 110 in Verbindung mit dem wenigstens einen Datenspeicher 120 zu senden und/oder von diesen zu empfangen.

Die Fernsteuerungseinrichtung 500, 650, 300; 3n0 des digital vernetzten Erfassungssystems für Milch 1000 ist dazu eingerichtet, wenigstens eine der folgenden verfahrenstechnischen Maßnahmen zu veranlassen:

- Auswertung von ersten, zweiten und dritten Daten D1, D2, D3 und Ermittlung von Prozessinformationen über den jeweiligen Erfassungsprozess in einer der jeweiligen Anwendung angemessenen verzugsarmen Echtzeit;
- Archivierung von ersten, zweiten und dritten Daten D1, D2, D3 und/oder Prozessinformationen;
- Überwachung, Korrektur und Optimierung des jeweiligen Erfassungsprozesses in einer der jeweiligen Anwendung angemessenen verzugsarmen Echtzeit;
- dynamische Anpassung der Erfassungstour 70, Einrichtung von Sonderrouten und Abweichungen von offiziellen Wegen, jeweils in einer der jeweiligen Anwendung angemessenen verzugsarmen Echtzeit;
- Auswertung von ersten, zweiten und dritten Daten D1, D2, D3 und/oder Prozessinformationen zur vorausschauenden Wartung von Verschleißkomponenten des digital vernetzten Erfassungssystems für Milch 1000 und/oder vorausschauenden Ersatzteilbestellung für dasselbe.

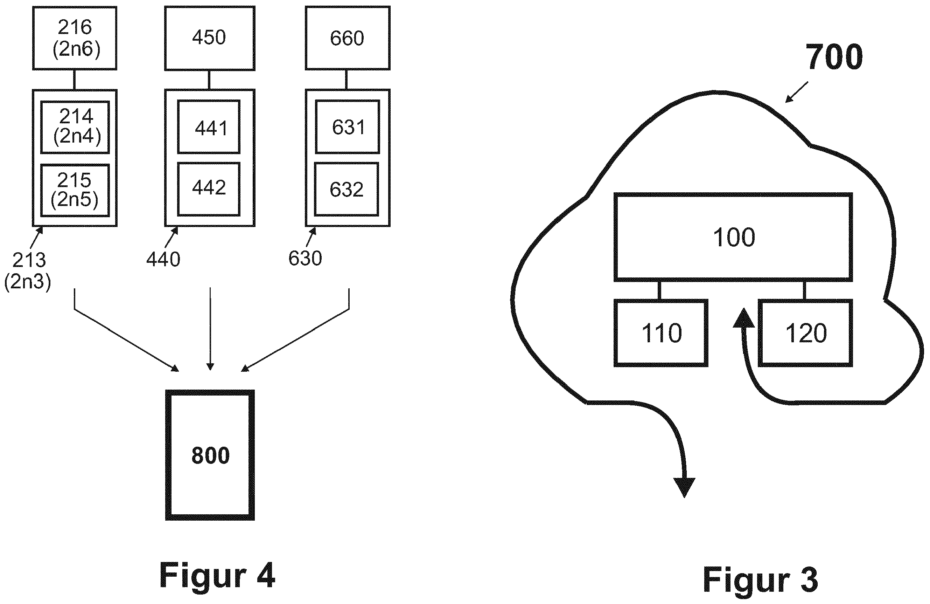

Es hat sich nach dem heutigen Stand der Datentechnik als vorteilhaft, kostensparend und manipulationssicher erwiesen, wenn die im erfindungsgemäßen digital vernetzten Erfassungssystem für Milch 1000 generierten Daten und angewendeten Anwenderprogramme in dem wenigstens einen Prozessor 110 (**Figur 3**) in Verbindung mit dem wenigstens einen Datenspeicher 120 abgelegt und über das Datennetzwerk 100 innerhalb einer geschlossenen Daten-Cloud 700 verwaltet werden.

**Abb. 4** zeigt in schematischer Darstellung eine modulare, standardisierte, universell einsetzbare Steuerungs- und Datenübertragungseinrichtung 800, die beispielhaft die Kompatibilität, Struktur, Funktionalität und Vernetzbarkeit der sammelwagenseitigen Steuerungseinrichtung 440 (einschließlich sammelwagenseitiger Prozessor und Datenspeicher 441, 442) in Verbindung mit der sammelwagenseitigen Datenübertragungseinrichtung 450, der molkereiseitigen Steuerungseinrichtung 630 (einschließlich molkereiseitiger Prozessor und Datenspeicher 631, 632) in Verbindung mit der molkereiseitigen Datenübertragungseinrichtung 660 sowie im Bedarfsfall optional und zusätzlich die tankseitige Steuerungseinrichtung 213 bzw. 2n3 (einschließlich tankseitiger n-ter Prozessor und Datenspeicher 2n4, 2n5) in Verbindung mit der tankseitigen Datenübertragungseinrichtung 216 bzw. 2n6 in sich vereinigt.

Ihre interne Struktur realisiert gleichermaßen die notwendigen Steuerungsfunktionen für anzusteuernde Aktoren (jegliche Antriebe, Ventile, Pumpen, Messeinrichtungen, u.a.) und die Datenübertragungsfunktionen zum Datenaustausch im Datennetzwerk 100 durch ein geeignetes Schnittstellenangebot.

Der vorliegende Anmeldungsgegenstand ist hinsichtlich der verwendeten informationstechnischen Begrifflichkeiten wie Datenübertragungseinrichtung, Fernsteuerungseinrichtung, Steuerungseinrichtung, Sensoreinrichtung, Datennetzwerk, Daten-Cloud, Echtzeit nicht festgelegt auf diese Begrifflichkeiten. Es können gleichwertige oder gleichartige Begriffe mitgelesen werden. Dies betrifft auch die hinter diesen Begrifflichkeiten stehenden Geräte und Gerätschaften mit gleicher Wirkung oder Funktion. In diesem Zusammenhang sollen noch einige konkrete Erläuterungen hinzugefügt werden:

**Echtzeit:** Unter Echtzeit soll der Betrieb eines Rechensystems verstanden werden, bei dem Programme zur Verarbeitung anfallender Daten ständig betriebsbereit sind, derart, dass die Verarbeitungsergebnisse innerhalb einer vorgegebenen Zeitspanne verfügbar sind bzw. in einer der jeweiligen Anwendung angemessenen verzugsarmen Zeitspanne. Demzufolge können Zeitspannen von unter einer Sekunde, im Sekundenbereich und bis in den Minutenbereich hinein jeweils angemessen sein. Das bedeutet im Einzelfall, beispielsweise bei ereignisabhängigen Steuerungsfunktionen, dass die Datenverarbeitung (nahezu) simultan mit den entsprechenden Prozessen in der Realität abläuft.

In Fällen, wo beispielsweise der Lieferant, der Fahrer, das Fuhrunternehmen oder der Disponent in der Molkerei oder Milchsammelstelle aus einer jeweiligen Situation heraus sehr schnell eine Entscheidung treffen muss, umfasst die in Frage kommende Zeitspanne der Echtzeit beispielweise nur wenige Sekunden bis Minuten. Bei Auswertungen kann die Zeitspanne auch im Minutenbereich oder länger liegen.

**Datenübertragungseinrichtung:**
Hierunter ist jedwede Einrichtung zu verstehen, die webbasiert bzw. internetbasiert Daten senden und Daten empfangen kann.

**Fernsteuerungseinrichtung:**
Hierunter ist jedwede Einrichtung zu verstehen, das als Endgerät das webbasierte bzw. internetbasierte Eingeben oder Einlesen von Daten und das Versenden dieser Daten ermöglicht und in umgekehrter Richtung Daten empfangen und in jedweder Form ausgeben kann.

**Steuerungseinrichtung:**
Hierunter ist jedwede vorzugsweise lokale Hardware in Verbindung mit einer Software zu verstehen, die ggf. unter Verwendung lokaler Netzwerke automatische Steuerungsabläufe realisiert.

BEZUGSZEICHENLISTE DER VERWENDETEN ABKÜRZUNGEN

1000     digital vernetztes Erfassungssystem für Milch

2n     webbasierte tankseitige n-te Datenverbindung
21     webbasierte tankseitige erste Datenverbindung
22     webbasierte tankseitige zweite Datenverbindung
23     webbasierte tankseitige dritte Datenverbindung

3n     webbasierte lieferantenseitige n-te Datenverbindung
31     webbasierte lieferantenseitige erste Datenverbindung
32     webbasierte lieferantenseitige zweite Datenverbindung
33     webbasierte lieferantenseitige dritte Datenverbindung

45     webbasierte sammelwagenseitige Datenverbindung
50     webbasierte fahrer- und/oder fuhrunternehmerseitige Datenverbindung
66     webbasierte molkereiseitige Datenverbindung

70     Erfassungstour

100     Datennetzwerk
110     Prozessor
120     Datenspeicher

200     Lieferantenstelle (allgemein); oder Erzeugerstelle
2n0     n-te Lieferantenstelle
2n1     n-ter Lieferantentank
2n2     tankseitige n-te Sensoreinrichtung (Volumen, Temperatur, pH-Wert)
2n3     tankseitige n-te Steuerungseinrichtung
2n4     tankseitiger n-ter Prozessor
2n5     tankseitiger n-ter Datenspeicher
2n6     tankseitige n-te Datenübertragungseinrichtung

210     erste Lieferantenstelle
211     erster Lieferantentank
212     tankseitige erste Sensoreinrichtung
213     tankseitige erste Steuerungseinrichtung
214     tankseitiger erster Prozessor
215     tankseitiger erster Datenspeicher
216     tankseitige erste Datenübertragungseinrichtung

220     zweite Lieferantenstelle
221     zweiter Lieferantentank
222     tankseitige zweite Sensoreinrichtung
223     tankseitige zweite Steuerungseinrichtung
224     tankseitiger zweiter Prozessor
225     tankseitiger zweiter Datenspeicher

| | |
|---|---|
| 226 | tankseitige zweite Datenübertragungseinrichtung |
| 230 | dritte Lieferantenstelle |
| 231 | dritter Lieferantentank |
| 232 | tankseitige dritte Sensoreinrichtung |
| 233 | tankseitige dritte Steuerungseinrichtung |
| 234 | tankseitiger dritter Prozessor |
| 235 | tankseitiger dritter Datenspeicher |
| 236 | tankseitige dritte Datenübertragungseinrichtung |
| 300 | lieferantenseitige Fernsteuerungseinrichtung (allg.; z.B. Mobil-Client) |
| 3n0 | lieferantenseitige n-te Fernsteuereinrichtung |
| 3n1 | n-ter Lieferant |
| 310 | lieferantenseitige erste Fernsteuerungseinrichtung |
| 311 | erster Lieferant |
| 320 | lieferantenseitige zweite Fernsteuerungseinrichtung |
| 321 | zweiter Lieferant |
| 330 | lieferantenseitige dritte Fernsteuerungseinrichtung |
| 331 | dritter Lieferant |
| 400 | Milchsammelwagen |
| 410 | Sammelbehälter |
| 420 | Annahmesystem |
| 430 | Messanlage |
| 440 | sammelwagenseitige Steuerungseinrichtung |
| 441 | sammelwagenseitiger Prozessor |
| 442 | sammelwagenseitiger Datenspeicher |
| 450 | sammelwagenseitige Datenübertragungseinrichtung |
| 460 | sammelwagenseitige Schlauchleitung |
| 500 | fahrer- und/oder fuhrunternehmerseitige Fernsteuerungseinrichtung |
| 510 | Fahrer (Milchsammelwagen) |
| 520 | Fuhrunternehmen (Milchsammelwagen) |
| 600 | Molkerei oder Milchsammelstelle |
| 610 | molkereiseitiger Stapelbehälter |
| 620 | molkereiseitige Sensoreinrichtung |
| 630 | molkereiseitige Steuerungseinrichtung |
| 631 | molkereiseitiger Prozessor |
| 632 | molkereiseitiger Datenspeicher |
| 640 | molkereiseitiges Datennetzwerk |
| 650 | molkereiseitige Fernsteuerungseinrichtung (z.B. PC-Client) |
| 660 | molkereiseitige Datenübertragungseinrichtung |
| 670 | molkereiseitige Schlauchleitung |
| 680 | Betreiber (Akteur des Erfassungssystems für Milch) |
| 700 | Daten-Cloud |
| 800 | standardisierte Steuerungs- und Datenübertragungseinrichtung |
| $m_i$ | Milchmenge |
| $m$ | Gesamtmilchmenge $\left(m = \sum_{i=1}^{n} m_i\right)$ |
| n | Anzahl |
| D1 | erste Daten zur digitalen Weiterverarbeitung |
| D2 | zweite Daten zur digitalen Weiterverarbeitung |

D3    dritte Daten zur digitalen Weiterverarbeitung

LVD   lieferantenspezifische Vorgabedaten
M     Milch
MK    Milchlieferkette

P     Milchprobe

MMG   molkereiseitige Milchmessgrößen
SMG    sammelwagenseitige Milchmessgrößen
TMG    tankseitige Milchmessgrößen

**Patentansprüche**

1. Digital vernetztes Erfassungssystem für Milch (1000), das umfasst:

    • wenigstens eine Lieferantenstelle (200; 210, 220, 230, ... 2n0), die wenigstens einen Lieferantentank (211, 221, 231, ... 2n1) aufweist, wobei die Lieferantenstelle (200; 2n0) so eingerichtet ist,

        ◦ dass der wenigstens eine Lieferantentank (2n1) eine in diesem bevorratete Milchmenge ($m_i$) einer Milch (M) zur Abholung bereitstellt,
        ◦ dass zu dieser Milchmenge ($m_i$) optional und zusätzlich wenigstens zugeordnete tankseitige Milchmessgrößen (TMG) ermittelt und in Form von dritten Daten (D3) zur digitalen Weiterverarbeitung bereitgestellt werden,

    • wenigstens einen Milchsammelwagen (400), der so eingerichtet ist, dass dieser

        ◦ die in dem wenigstens einen Lieferantentank (2n1) bereitgestellte Milchmenge ($m_i$) in einen Sammelbehälter (410) des Milchsammelwagens (400) überführt,
        ◦ im Zuge der Überführung der Milchmenge ($m_i$) für diese Milchmenge ($m_i$) wenigstens ausgewählte sammelwagenseitige Milchmessgrößen (SMG) ermittelt und
        ◦ die wenigstens sammelwagenseitigen Milchmessgrößen (SMG) in Form von ersten Daten (D1) zur digitalen Weiterverarbeitung bereitstellt,

    • wenigstens eine Molkerei oder Milchsammelstelle (600), die so eingerichtet ist,

        ◦ dass diese eine von dem Milchsammelwagen (400) auf einer Erfassungstour (70) in dem Sammelbehälter (410) aufgenommene Gesamtmilchmenge (m) in einen molkereiseitigen Stapelbehälter (610) überführt und
        ◦ dabei wenigstens dieser Gesamtmilchmenge (m) zugeordnete molkereiseitige Milchmessgrößen (MMG) erfasst und diese in Form von zweiten Daten (D2) zur digitalen Weiterverarbeitung bereitstellt,

    **dadurch gekennzeichnet,**

    • **dass** der wenigstens eine Milchsammelwagen (400) eine sammelwagenseitige Datenübertragungseinrichtung (450) aufweist,
    • **dass** die wenigstens eine Molkerei oder Milchsammelstelle (600) eine molkereiseitige Datenübertragungseinrichtung (660) aufweist,
    • **dass** die wenigstens eine Lieferantenstelle (200; 2n0) eine tankseitige Datenübertragungseinrichtung (216, 226, 236, ... 2n6) aufweist,
    • **dass** in dem wenigstens einen Milchsammelwagen (400) jeweils wenigstens eine fahrerseitige Fernsteuerungseinrichtung (500) für einen zugeordneten Fahrer (510) und/oder bei einem zugeordneten Fuhrunternehmen (520) eine fuhrunternehmerseitige Fernsteuerungseinrichtung (500) vorgesehen sind/ist,
    • **dass** in oder im Bereich der wenigstens einen Molkerei oder Milchsammelstelle (600) jeweils wenigstens eine molkereiseitige Fernsteuereinrichtung (650) vorgesehen ist,
    • **dass** an oder im Bereich der wenigstens einen Lieferantenstelle (200; 2n0) jeweils eine lieferantenseitige Fernsteuerungseinrichtung (300; 310, 320, 330, ... 3n0) für einen Lieferanten (311, 321, 331, ... 3n1) vorgesehen ist,

• **dass** die jeweilige Datenübertragungseinrichtung (450, 660, 2n6) sowie die jeweilige Fernsteuerungseinrichtung (500, 650, 300; 3n0) mit einem Datennetzwerk (100) datenleitend verbunden ist und das Datennetzwerk (100) mit wenigstens einem Prozessor (110) und wenigstens einem Datenspeicher (120) in datenleitender Verbindung steht, und
• **dass** die jeweilige Datenübertragungseinrichtung (450, 660, 2n6) sowie die jeweilige Fernsteuerungseinrichtung (500, 650, 300; 3n0) dazu eingerichtet sind, die zugeordneten ersten, zweiten oder dritten Daten (D1, D2, D3) in einer der jeweiligen Anwendung angemessenen verzugsarmen Echtzeit drahtlos an das Datennetzwerk (100) zu senden und/oder von diesem zu empfangen.

2. Digital vernetztes Erfassungssystem für Milch (1000) nach Anspruch 1,
   **dadurch gekennzeichnet,**
   **dass** das Datennetzwerk (100) als eines der folgenden ausgebildet ist:

   • Web,
   • Ethernet,
   • Intranet,
   • Internet.

3. Digital vernetztes Erfassungssystem für Milch (1000) nach Anspruch 1 oder 2,
   **dadurch gekennzeichnet,**
   **dass** der mit dem Datennetzwerk (100) jeweils datenleitend verbundene wenigstens eine Prozessor (110) und wenigstens eine Datenspeicher (120) in einer geschlossenen Daten-Cloud (700) oder dezentral bei einem Betreiber (680) des Erfassungssystems für Milch (1000) angeordnet ist.

4. Digital vernetztes Erfassungssystem für Milch (1000) nach einem der vorstehenden Ansprüche,
   **dadurch gekennzeichnet,**
   **dass** datenleitende Verbindungen innerhalb des Milchsammelwagens (400), der Molkerei oder Milchsammelstelle (600) und der Lieferantenstelle (200, 2n0) als wenigstens eine der folgenden ausgebildet sind:

   • BUS-Systeme wie

     ◦ Profibus
     ◦ CAN-Bus
     ◦ MOD-Bus,

   • Ethernet,
   • Direktverbindung,
   • allgemeine drahtlose Verbindungen wie

     ◦ Bluetooth
     ◦ Funkstrecke
     ◦ RFID

5. Digital vernetztes Erfassungssystem für Milch (1000) nach einem der vorstehenden Ansprüche,
   **dadurch gekennzeichnet,**

   • **dass** der wenigstens eine Milchsammelwagen (400) eine sammelwagenseitige Steuerungseinrichtung (440) zur automatischen Steuerung eines Annahmesystems (420) aufweist, mit wenigstens einem sammelwagenseitigen Prozessor (441) und wenigstens einem Datenspeicher (442), und
   • **dass** die sammelwagenseitige Steuerungseinrichtung (440) einerseits datenleitend verbunden ist mit einer Messanlage (430) zur Ermittlung der sammelwagenseitigen Milchmessgrößen (SMG) und andererseits datenleitend verbunden ist mit der sammelwagenseitigen Datenübertragungseinrichtung (450).

6. Digital vernetztes Erfassungssystem für Milch (1000) nach einem der vorstehenden Ansprüche,
   **dadurch gekennzeichnet,**

   • **dass** die wenigstens eine Molkerei oder Milchsammelstelle (600) eine molkereiseitige Steuerungseinrichtung (630) mit wenigstens einem molkereiseitigen Prozessor (331) und wenigstens einem Datenspeicher (332) zur automatischen Steuerung der Über- und Aufnahme der Gesamtmilchmenge (m) in den Stapelbehälter (610) aufweist, und
• **dass** die molkereiseitige Steuerungseinrichtung (630) einerseits datenleitend verbunden ist mit einer molkereiseitigen Sensoreinrichtung (620) zur Ermittlung wenigstens der molkereiseitigen Milchmessgrößen (MMG) und andererseits datenleitend verbunden ist mit der molkereiseitigen Datenübertragungseinrichtung (660).

7.  Digital vernetztes Erfassungssystem für Milch (1000) nach einem der vorstehenden Ansprüche,
    **dadurch gekennzeichnet,**

    • **dass** die wenigstens eine Lieferantenstelle (200, 2n0) eine tankseitige Steuerungseinrichtung (213, 223, 233, ... 2n3) zur automatischen Steuerung der Lieferantenstelle (200, 2n0) aufweist, mit wenigstens einem tankseitigen Prozessor (214, 224, 234, ...2n4) und wenigstens einem Datenspeicher (215, 225, 235, ... 2n5) und,
    • **dass** die tankseitige Steuerungseinrichtung (2n3) einerseits datenleitend verbunden ist mit einer tankseitigen Sensoreinrichtung (212, 222, 232, ... 2n2) zur Ermittlung der tankseitigen Milchmessgrößen (TMG), und
    • **dass** die tankseitige Steuerungseinrichtung (2n3) andererseits datenleitend verbunden ist mit der tankseitigen Datenübertragungseinrichtung (2n6).

8.  Digital vernetztes Erfassungssystem für Milch (1000) nach einem der vorstehenden Ansprüche,
    **dadurch gekennzeichnet,**
    **dass** die sammelwagenseitige, die molkereiseitige und die tankseitige Steuerungseinrichtung (440, 630, 2n3) jeweils einen temporären Zwischenspeicher aufweist, der so eingerichtet ist, dass bei mangelnder Konnektivität im Datennetzwerk (100) die jeweils zugeordneten ersten, zweiten und dritten Daten (D1, D2, D3) im Zwischenspeicher temporär gespeichert und zu einem späteren Zeitpunkt, wenn eine Netzverbindung wieder vorliegt, übertragen werden.

9.  Digital vernetztes Erfassungssystem für Milch (1000) nach Anspruch 5,
    **dadurch gekennzeichnet,**
    **dass** das Annahmesystem (420) mindestens einen der folgenden Sensoren aufweist:

|  |  |
|---|---|
| • Temperatursensor, | • Füllstandssensor, |
| • Drucksensor, | • Leermeldesensor, |
| • Durchfluss-/Strömungssensor, | • Bildsensor, insbesondere Videokamera, |
| • Leitfähigkeitssensor, | • Gewichtssensor. |
| • Trübungssensor/ Schwebekörpersensor, | • Endlagensensor, |
| | • Lagerüberwachungssensor, |
| • Viskositätssensor, | • Verschleißsensor, |
| • pH-Wert-Sensor, | • Drehmomentsensor, |
| • Schaumsensor, | • Drehzahlsensor. |

10. Digital vernetztes Erfassungssystem für Milch (1000) nach Anspruch 6,
    **dadurch gekennzeichnet,**
    **dass** die molkereiseitige Sensoreinrichtung (620) mindestens einen der folgenden Sensoren aufweist:

|  |  |
|---|---|
| • Temperatursensor, | • Leitfähigkeitssensor, |
| • Drucksensor, | • Trübungssensor/ Schwebekörpersensor, |
| • Durchflusssensor/ Strömungssensor, | • Viskositätssensor, |
| • pH-Wert-Sensor, | • Bildsensor, insbesondere Videokamera, |
| • Schaumsensor, | |
| • Füllstandssensor, | • Gewichtssensor. |
| • Leermeldesensor, | |

11. Digital vernetztes Erfassungssystem für Milch (1000) nach Anspruch 7,
    **dadurch gekennzeichnet,**

**dass** die tankseitige Sensoreinrichtung (212, ... 2n2) mindestens einen der folgenden Sensoren aufweist:

- Temperatursensor,
- Drucksensor,
- Durchfluss-/Strömungssensor,
- Leitfähigkeitssensor,
- Trübungssensor/Schwebekörpersensor,
- Viskositätssensor,
- pH-Wert-Sensor,
- Schaumsensor,
- Füllstandssensor,
- Leermeldesensor,
- Bildsensor, insbesondere Videokamera,
- Drehzahlsensor
- Gewichtssensor.

12. Digital vernetztes Erfassungssystem für Milch (1000) nach einem der Ansprüche 7 bis 11,
**dadurch gekennzeichnet,**
**dass** eine standardisierte Steuerungs- und Datenübertragungseinrichtung (800) vorgesehen ist, die derart konfiguriert und mit Schnittstellen ausgestattet ist, dass sie als modulares, standardisiertes, universell einsetzbares Bauteil die sammelwagenseitige Steuerungseinrichtung (440) in Verbindung mit der sammelwagenseitigen Datenübertragungseinrichtung (450), die molkereiseitige Steuerungseinrichtung (630) in Verbindung mit der molkereiseitigen Datenübertragungseinrichtung (660) sowie die tankseitige Steuerungseinrichtung (2n3) in Verbindung mit der tankseitigen Datenübertragungseinrichtung (2n6) hinsichtlich Kompatibilität, Struktur, Funktionalität und Vernetzbarkeit uneingeschränkt substituiert.

13. Digital vernetztes Erfassungssystem für Milch (1000) nach einem der vorhergehenden Ansprüche,
**dadurch gekennzeichnet,**
**dass** die Fernsteuerungseinrichtung (300, 3n0; 500, 650) dazu eingerichtet ist, wenigstens eine der folgenden Maßnahmen zu veranlassen:

- Auswertung von ersten, zweiten und dritten Daten (D1, D2, D3) und Ermittlung von Prozessinformationen über den jeweiligen Erfassungsprozess in einer der jeweiligen Anwendung angemessenen verzugsarmen Echtzeit;
- Archivierung von ersten, zweiten und dritten Daten (D1, D2, D3) und/oder Prozessinformationen;
- Überwachung, Korrektur und Optimierung des jeweiligen Erfassungsprozesses in einer der jeweiligen Anwendung angemessenen verzugsarmen Echtzeit;
- dynamische Anpassung der Erfassungstour (70), Einrichtung von Sonderrouten und Abweichungen von offiziellen Wegen, jeweils in einer der jeweiligen Anwendung angemessenen verzugsarmen Echtzeit;
- Auswertung von ersten, zweiten und dritten Daten (D1, D2, D3) und/oder Prozessinformationen zur vorausschauenden Wartung von Verschleißkomponenten des digital vernetzten Erfassungssystems für Milch (1000) und/oder vorausschauenden Ersatzteilbestellung für dasselbe.

14. Verfahren zur Erfassung von Milch (M) in einem digital vernetzten Erfassungssystem für Milch (1000), wobei das Erfassungssystem für Milch (1000) eine Milchlieferkette (MK) bildet mit wenigstens einem Lieferantentank (211, 221, 231, ... 2n1) an wenigstens einer Lieferantenstelle (200; 210, 220, 230, ... 2n0), einem jeweils zugeordneten Lieferanten (311, 321, 331, ... 3n1), wenigstens einem Milchsammelwagen (400) mit einem zugeordneten Fahrer (510) und/oder Fuhrunternehmen (520) und wenigstens einer Molkerei oder Milchsammelstelle (600),

- wobei das Verfahren im Verlauf einer vorgegebenen Erfassungstour (70) zur Übernahme von Milch (M) aus den Lieferantentanks (2n1) verschiedener Lieferanten (3n1) in einen Sammelbehälter (410) des Milchsammelwagens (400) dient,
- bei welchem die jeweiligen Lieferanten (3n1) eine Milchmenge ($m_i$) bereitstellen,
- bei welchem im Zuge der Überführung der Milchmenge ($m_i$) für diese Milchmenge ($m_i$) wenigstens ausgewählte sammelwagenseitige Milchmessgrößen (SMG) ermittelt werden,
- bei welchem wenigstens die sammelwagenseitigen Milchmessgrößen (SMG) in Form von ersten Daten (D1) zur digitalen Weiterverarbeitung bereitstellt werden,
- bei welchem eine im Verlauf der Erfassungstour (70) in dem Sammelbehälter (410) aufgenommene Gesamtmilchmenge (m) in einen molkereiseitigen Stapelbehälter (610) überführt und dabei wenigstens dieser Gesamtmilchmenge (m) zugeordnete molkereiseitige Milchmessgrößen (MMG) erfasst und diese in Form von zweiten Daten (D2) zur digitalen Weiterverarbeitung bereitstellt werden, und
• bei welchem optional und zusätzlich zur bereitgestellten Milchmenge ($m_i$) wenigstens zugeordnete tankseitige Milchmessgrößen (TMG) ermittelt und in Form von dritten Daten (D3) zur digitalen Weiterverarbeitung bereitgestellt werden,

**dadurch gekennzeichnet,**

• **dass** die in einer sammelwagenseitigen, molkereiseitigen und tankseitigen Datenübertragungseinrichtung (450, 660; 216, 226, 236, ... 2n6) bereitgestellten ersten, zweiten und dritten Daten (D1, D2, D3) jeweils in einer der jeweiligen Anwendung angemessenen verzugsarmen Echtzeit mittels eines Datennetzwerks (100) und über eine zugeordnete webbasierte sammelwagenseitige, molkereiseitige und tankseitige Datenverbindung (45, 66; 21, 22, 23, ... 2n) an wenigstens einen Prozessor (110) übermittelt, dort verarbeitet und in wenigstens einem Datenspeicher (120) abgelegt und von dort von der sammelwagenseitigen, molkereiseitigen und tankseitigen Datenübertragungseinrichtung (450, 660; 2n6) empfangen werden,
• **dass** eine fahrer- und/oder fuhrunternehmerseitige, molkereiseitige und lieferantenseitige Fernsteuerungseinrichtung (500, 600, 300; 3n0) vorgesehen und dazu eingerichtet sind/ist, Daten mittels des Datennetzwerks (100) und über eine zugeordnete webbasierte fahrer- und/oder fuhrunternehmerseitige, molkereiseitige sowie lieferantenseitige Datenverbindung (50, 66; 31, 32, 33, ...3n) an den wenigstens einen Prozessor (110) in Verbindung mit dem wenigstens einen Datenspeicher (120) zu senden und/oder von diesen zu empfangen.

15. Verfahren nach Anspruch 14,
**dadurch gekennzeichnet,**
**dass** die Daten im Datennetzwerk (100) über eines der folgenden übertragen werden:

   • Web,
   • Ethernet,
   • Intranet,
   • Internet.

16. Verfahren nach Anspruch 14 oder 15,
**dadurch gekennzeichnet,**
**dass** die Daten auf dem Datenspeicher (120) in einer geschlossenen Daten-Cloud (700) oder auf einem molkereiseitigen Datenspeicher (632) gespeichert werden.

17. Verfahren nach einem der Ansprüche 14 bis 16,
**dadurch gekennzeichnet,**
**dass** bei mangelnder Konnektivität im Datennetzwerk (100) die ersten, zweiten und dritten Daten (D1, D2, D3) in einer jeweils zugeordneten sammelwagenseitigen, molkereiseitigen und tankseitigen Steuerungseinrichtung (440, 630, 2n3) jeweils so lange zwischengespeichert werden, bis eine Netzverbindung wieder vorliegt.

18. Verfahren nach einem der Ansprüche Anspruch 14 bis 17,
**dadurch gekennzeichnet,**
**dass** die Fernsteuerungseinrichtung (500, 650, 300; 3n0) dazu eingerichtet ist, wenigstens eine der folgenden verfahrenstechnischen Maßnahmen zu veranlassen:

   • Auswertung von ersten, zweiten und dritten Daten (D1, D2, D3) und Ermittlung von Prozessinformationen über den jeweiligen Erfassungsprozess in einer der jeweiligen Anwendung angemessenen verzugsarmen Echtzeit,
   • Archivierung von ersten, zweiten und dritten Daten (D1, D2, D3) und/oder Prozessinformationen,
   • Überwachung, Korrektur und Optimierung des jeweiligen Erfassungsprozesses in einer der jeweiligen Anwendung angemessenen verzugsarmen Echtzeit,
   • dynamische Anpassung der Erfassungstour (70), Einrichtung von Sonderrouten und Abweichungen von offiziellen Wegen, jeweils in einer der jeweiligen Anwendung angemessenen verzugsarmen Echtzeit,
   • Auswertung von ersten, zweiten und dritten Daten (D1, D2, D3) und/oder Prozessinformationen zur vorausschauenden Wartung von Verschleißkomponenten des Erfassungssystems für Milch (1000) und/oder vorausschauenden Ersatzteilbestellung für dasselbe.

**Figur 1**

Figur 2

EP 3 854 205 A1

216
(2n6)

450

660

**700**

214
(2n4)

215
(2n5)

441

442

631

632

100

213
(2n3)

440

630

110

120

800

**Figur 4**

**Figur 3**

Europäisches
Patentamt

European
Patent Office

Office européen
des brevets

# EUROPÄISCHER RECHERCHENBERICHT

**Nummer der Anmeldung**

EP 21 15 0850

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2004/154548 A1 (ERIKSSON JAN [SE]) 12. August 2004 (2004-08-12) * Absatz [0009] - Absatz [0063]; Abbildungen 1,2 * ----- | 1-18 | INV. A01J5/007 G06Q10/08 G06Q50/02 G06Q10/06 |
| Y | WO 2017/125111 A1 (SCANDINAVIAN MICRO BIODEVICES APS [DK]; CHR HANSEN AS [DK]) 27. Juli 2017 (2017-07-27) * Seite 2 - Seite 25; Abbildungen 1-3 * ----- | 1-18 | |
| A | AU 2011 101 433 A4 (SAMARAN INT PTY LTD [AU]) 8. Dezember 2011 (2011-12-08) * Seite 3 - Seite 8; Abbildungen 1,2 * ----- | 1-18 | |

**RECHERCHIERTE SACHGEBIETE (IPC)**

A01J
G06Q

Der vorliegende Recherchenbericht wurde für alle Patentansprüche erstellt

| Recherchenort | Abschlußdatum der Recherche | Prüfer |
|---|---|---|
| Den Haag | 9. Juni 2021 | Moeremans, Benoit |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 0850

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-06-2021

| Im Recherchenbericht angeführtes Patentdokument | Datum der Veröffentlichung | Mitglied(er) der Patentfamilie | Datum der Veröffentlichung |
|---|---|---|---|
| US 2004154548 A1 | 12-08-2004 | AT 341204 T<br>DE 60215155 T2<br>EP 1395109 A1<br>US 2004154548 A1<br>WO 02100164 A1 | 15-10-2006<br>25-10-2007<br>10-03-2004<br>12-08-2004<br>19-12-2002 |
| WO 2017125111 A1 | 27-07-2017 | AU 2017209368 A1<br>CA 3011643 A1<br>CN 108701290 A<br>EA 201891673 A1<br>EP 3405916 A1<br>US 2019026662 A1<br>WO 2017125111 A1 | 02-08-2018<br>27-07-2017<br>23-10-2018<br>28-12-2018<br>28-11-2018<br>24-01-2019<br>27-07-2017 |
| AU 2011101433 A4 | 08-12-2011 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3040171 C2
- DE 3440254 C2
- DE 102016012078 A1
- US 20170228742 A1
- CN 102799974 A
- CN 108731828 A